# EUROPÄISCHE PATENTANMELDUNG

(11) **EP 0 532 111 A2**
(43) Veröffentlichungstag der Anmeldung: **17.03.1993**
(21) Anmeldenummer: 92202731.3
(22) Anmeldetag: 09.09.1992
(51) Int. Cl.: G11B 15/18, G11B 15/44

(54) **Magnetbandkassettengerät mit einem Laufwerk (Kopfträgerverstellung)**

(30) Priorität: 13.09.1991 DE 4130404
(71) Anmelder: Philips Patentverwaltung GmbH, 22335 Hamburg (DE); Philips Electronics N.V., 5621 BA Eindhoven (NL)
(72) Erfinder: Kunze, Norbert, c/o Philips Patentverwaltung GmbH, W-2000 Hamburg 1 (DE); Weber, Georg, c/o Philips Patentverwaltung GmbH, W-2000 Hamburg 1 (DE)
(74) Vertreter: von Laue, Hanns-Ulrich, Dipl.-Ing.

(57) **Zusammenfassung**

Die Erfindung bezieht sich auf ein Magnetbandkassettengerät mit einem Laufwerk, einem zum Laufwerk gehörigen Wickelgetriebe (09) und einem Kopfträger (39), mit dem ein Tonkopf zwischen einer Spielstellung, in der der Tonkopf an ein in einer Magnetbandkassette geführtes Magnetband anlegbar ist, und einer Auswerf/Eject-Stellung verfahrbar ist, wobei der Kopfträger, der in Richtung auf die Auswerf/Eject-Stellung federbelastet ist, mittels eines Schleppmechanismus in Richtung auf die Spielstellung ziehbar ist und wobei ein Getrieberad des Schleppmechanismus (010) von einem Laufwerksantrieb in Umlauf versetzbar ist, wobei
- der Schleppmechanismus (010) ein vom Antriebsrad (9) des Wickelgetriebes (09) antreibbares Segmentzahnrad (43) mit einem zahnlosen Segment (43L) aufweist, wobei sich das Segment durch das Wirken von Arretierungen (34d und/oder 39f) in der Spiel- und Ejectstellung des Kopfträgers (39) vor dem Antriebsrad (9) befindet,
- das Segmentzahnrad (43) zusätzlich eine Vollzahnung (43b) aufweist, die mit einem Schlepprad (42) kämmt, das einen Bolzen (42a) aufweist, der auf den Kopfträger (39) derart einwirken kann, daß er diesen entweder in die Spielstellung drückt oder daß dieser das Drehen des Schlepprades in einer Stellung blockiert, in der das Segment (43L) vor dem Antriebsrad (9) steht und damit von diesem entkuppelt ist.

## Beschreibung

Die Erfindung bezieht sich auf ein Magnetbandkassettengerät mit einem Laufwerk, einem zum Laufwerk gehörigen Wickelgetriebe und einem Kopfträger, mit dem ein Tonkopf zwischen einer Spielstellung, in der der Tonkopf an ein in einer Magnetbandkassette geführtes Magnetband anlegbar ist, und einer Auswerf/Eject-Stellung verfahrbar ist, wobei der Kopfträger, der in Richtung auf die Auswerf/Eject-Stellung federbelastet ist, mittels eines Schleppmechanismus in Richtung auf die Spielstellung ziehbar ist und wobei ein Getrieberad des Schleppmechanismus von einem Laufwerksantrieb in Umlauf versetzbar ist.

Ein derartiges Magnetbandkassettengerät ist aus der DE 37 19 890 A1 (PHD 87-101) bekannt. Der Kopfträger weist dabei an beiden Längsenden Schenkel auf, von denen der eine mit einer Haltevorrichtung zusammenwirkt, mittels der der Kopfträger magnetisch in der Spielstellung gehalten werden kann. Aus der Spielstellung kann der Kopfträger in eine Eject-Stellung zurückfallen. Der andere Schenkel wirkt mit einem Stellmechanismus zusammen, der den Kopfträger aus der Eject-Stellung in die Spielstellung überführen kann. Dieser Mechanismus besteht aus einer Servostange, die unmittelbar oder über ein Zwischenglied gegen das freie Ende des anderen Schenkels des einseitig drehbar gelagerten Kopfträgers drücken kann. Die Servostange verstellt beim Drücken gegen das freie Schenkelende den anderen Schenkel des Kopfträgers in Richtung auf die Haltevorrichtung.

Bei dem in der DE 37 19 890 A1 beschriebenen Magnetbandkassettengerät erfolgt die Steuerung der Laufwerksfunktionen über einen Servomechanismus mit einem Mikroprozessor. Ein Laufwerk für ein derartig ausgerüstetes Gerät ist nur für hochwertige Gerätegruppen geeignet. Laufwerke für niedriger klassifizierte Magnetbandkassettengeräte arbeiten rein mechanisch, und die Laufwerksfunktionen werden über von der Außenseite des Gerätes bedienbare Tastenstangen mechanisch gesteuert.

Aus der US-PS 39 76 263 ist eine Kopfträgerverstellung bekannt, bei der ein Kopfträger von einer Schiebeplatte in eine Spielstellung verfahrbar ist mit Hilfe eines Getrieberades, das von einem Zahnrad einer Tonwelle antreibbar ist. Die Verschiebung der Schiebeplatte kann vor sich gehen, wenn eine Startplatte das Getrieberad zum Drehen freigibt und die Kopfplatte mit der Schiebeplatte gekoppelt wird. Die Anzahl der bedeutenden Raum beanspruchenden Bauteile ist dabei für kleinbauende Geräte, wie Autoradios, zu groß.

Es ist Aufgabe der Erfindung, ein Gerät der eingangs erwähnten Art zu schaffen, bei dem das Verstellen der Kopfplatte in die Spielstellung mit einfachen, kleinbauenden mechanischen Mitteln auf mechanisch einfache Weise gelöst ist.

Die gestellte Aufgabe ist erfindungsgemäß dadurch gelöst, daß
- der Schleppmechanismus ein vom Antriebsrad des Wickelgetriebes antreibbares Segmentzahnrad mit einem zahnlosen Segment aufweist, wobei sich das Segment durch das Wirken von Arretierungen in der Spiel- und Ejectstellung des Kopfträgers vor dem Antriebsrad befindet,
- das Segmentzahnrad zusätzlich eine Vollzahnung aufweist, die mit einem Schlepprad kämmt, das einen Bolzen aufweist, der auf den Kopfträger derart einwirken kann, daß er diesen entweder in die Spielstellung drückt oder daß dieser das Drehen des Schlepprades in einer Stellung blockiert, in der das Segment vor dem Antriebsrad steht und damit von diesem entkuppelt ist.

Die das Vorschleppen in die Spielstellung bewirkenden Räder eignen sich insbesondere zum unmittelbaren Herstellen als Outsert-Moulding-Teile an der Chassisplatte des Laufwerkes. Dies ist eine Kunststoffspritz- oder Gießtechnik, in der die Kunststoffteile an einer metallischen Tragplatte in einem Arbeitsgang gebildet werden. Durch eine Nachbehandlung, wie sie beispielsweise in der EP 392 600 A2 (PHD 89-053 EP) beschrieben ist, werden die an die Chassisplatte angeformten Räder drehbeweglich gemacht. Die Funktionsteile sind nur die beiden Räder, die mit einer Schleppfeder und einer den Kopfträger in Zurückfahrrichtung belastenden Kopfträgerfeder zusammenwirken. Die Konstruktion beansprucht damit wenig Platz.

Nach einer weiteren Ausgestaltung der Erfindung ist vorgesehen, daß eine Schleppradfeder vorgesehen ist, die bestrebt ist, das Segmentrad in den Zahneingriff mit dem antreibenden Zahnrad der Wickelgetriebe zu bringen, woran es nur durch die Arretierungen gehindert ist. Die Schleppfeder wird nur durch die Arretierungen darin gehindert, das Segmentrad in den Eintriff mit dem Zahnrad des antreibenden Wickelgetriebes zu bringen.

Nach einer weiteren Ausgestaltung der Erfindung ist vorgesehen, daß eine Arretierung des Schlepprades von einer Nachlaufsperre gebildet ist, die bei aus der Wiedergabestellung vorgefahrener Ejectstange mit einer Sperrnase in das Schlepprad drückt. Diese Arretierung dient sowohl der Sicherung des Schleppmechanismus gegen ein ungewünschtes Hochschleppen des Kopfträgers aus der Eject-Stellung als auch der Verhinderung eines Motornachlaufens nach dem Abfallen des Kopfträgers in die Eject-Stellung und dem dabei erfolgenden Abschalten des Motors.

Nach einer weiteren Ausgestaltung der Erfindung ist vorgesehen, daß eine weitere Arretierung des Schlepprades von einer Anschlagkante des Kopfträgers bewirkt wird, gegen die bei in Spielstellung befindlichem Kopfträger der Bolzen des Schlepprades auflaufen kann. Diese Arretierung sorgt dafür, daß der Schleppmechanismus nicht drehen kann, solange sich der Kopfträger in der Spielstellung befindet.

Nach einer weiteren Ausgestaltung der Erfindung ist vorgesehen, daß ein Schleppschieber vorgesehen ist, der am parallel zur Magnetbandführung verschiebbaren Kopfträger in dessen Verschieberichtung verschiebbar gelagert ist und über den der Kopfträger mittels des Schlepprades in die Spielstellung schiebbar ist. Dieser Schleppschieber ist ein Zwischenglied zwischen dem Schleppmechanismus und dem Kopfträger. Über ihn läßt sich der Kopfträger in der Spielstellung besonders gut verspannt festlegen.

Nach einer weiteren Ausgestaltung der Erfindung ist vorgesehen, daß der Kopfträger mittels einer Kopfträgerfeder in die Spielstellung gedrückt wird, die über den Schleppschieber auf den Kopfträger einwirkt. Der Verspannweg Kopfträgerfeder zu Kopfträger geht damit über den Schleppschieber.

Nach einer weiteren Ausgestaltung der Erfindung ist vorgesehen, daß die Kopfträgerfeder als Schenkelfeder ausgebildet ist mit einem ersten Arm, der den Kopfträger in Richtung auf die Ejectstellung belastet, und einem zweiten Arm, der den Kopfträger in Richtung auf die Eject-Stellung belastet. Eine solche Schenkelfeder führt zu einer weichen, jedoch ausreichend kräftigen Verspannung des Kopfträgers in seiner Spielstellung.

Nach einer weiteren Ausgestaltung der Erfindung ist vorgesehen, daß das freie Ende des ersten Armes der Kopfträgerfeder an der ausgeschobenen Ejectstange derart verrastbar ist, daß der erste Arm den Kopfträger in der Spielstellung arretiert, und daß die Arretierung aufhebbar ist durch das Einschieben der Ejectstange zum Zwecke des Kassettenauswurfes. Solange die Ejectstange ausgefahren ist, ist damit der Kopfträger in der Spielstellung sicher festgelegt.

Nach einer weiteren Ausgestaltung der Erfindung ist vorgesehen, daß die Kopfträgerfeder auf dem Kopfträger mittels eineszwischen dem ersten Arm und dem zweiten Arm vorgesehenen Halterungsteils gelagert ist und daß ihr zweiter Arm sich ebenfalls am Kopfträger an einer Stelle so abstützt, daß eine Bewegung des ersten Armes in Richtung auf die Spielstellung des Kopfträgers den Kopfträger verschiebt, da die resultierenden Drehmomente auf die Kopfträgerfeder sich im Kopfträger abstützen, und daß die Verlängerung des zweiten Armes, die sich am Laufwerkschassis abstützt, kräftemäßig vom ersten Arm entkoppekt ist, wodurch der zweite Arm eine weitere federnde Funktion (z. B. Rückführung des Kopfträgers von der Spielstellung in die Eject-Stellung, die kraftmäßig auf einem anderen Niveau liegt als die erste Funktion) ausführen kann.

Die Erfindung wird anhand der Zeichnung näher erläutert. Es zeigen:
Fig. 1 das Laufwerk eines Magnetbandkassettengerätes insbesondere zur Verwendung in einem Autoradio mit einem Wickelgetriebe, einem Kopfträger und einem Schleppmechanismus zum Hochschleppen des Kopfträgers in seine Spielstellung,
Fig. 2 das Wickelgetriebe des Laufwerkes nach Fig. 1 im Schnitt,
Fig. 3 den Kopfträger und den Schleppmechanismus bei in Eject-Stellung befindlichem Kopfträger,
Fig. 4 die Arretierung des Schleppmechanismus bei in Eject-Stellung befindlichem Kopfträger,
Fig. 5 den in der Spielstellung arretierten Kopfträger,
Fig. 6 eine Seitenansicht eines Teiles der Ejectstange im Zusammenwirken mit einer Kopfträgerfeder anhand des Schnittes VI-VI in Fig. 5.

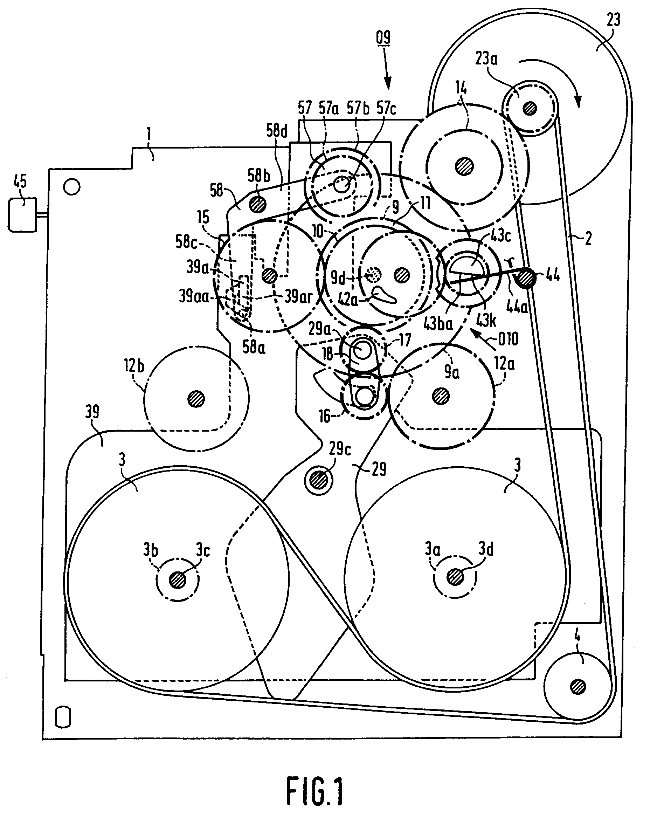

Fig. 1 zeigt das Laufwerk eines Magnetbandkassettengerätes mit einem Chassis 1 und dem Wickelgetriebe 09 sowie einem Schleppmechanismus 010 des Laufwerkes. Ein Motor 23 treibt über eine Peese 2 in entgegengesetzter Richtung Schwungscheiben 3 für die Tonwellen 3a für Rückwärtsspielbetrieb (REV) und 3b für Vorwärtsspielbetrieb (NOR) an. Die Tonwellen 3c, 3d sind mit Verzahnungen 3a und 3b versehen. Die Peese 2 ist über eine Umlenkrolle 4 geführt.

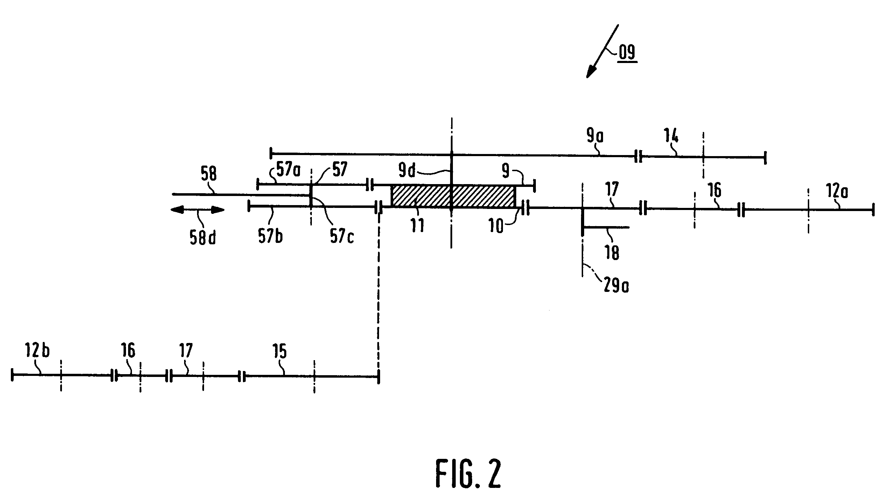

Dem Antrieb des Vorwärtswickeltellers 12a für den Vorwärtsspielbetrieb (NOR) und des Reversewickeltellers 12b für Rückwärtsspielbetrieb (REV) dient ein Wickelgetriebe 09, welches ebenfalls von dem Motor 23 angetrieben wird und welches in Fig. 2 im Schnitt dargestellt ist. Der Motor 23 ist nur in einer Richtung umlauffähig. Der Motor 23 treibt mit seiner Welle 23a über ein Antriebszwischenrad 14 eine Spielkupplung mit einem Antriebszahnkranz 9a eines Primärkupplungsrades 9 an, welches sich - solange sich die Motorwelle 23a dreht - ständig um eine Welle 9d dreht. Das Primärkupplungsrad 9 treibt ein konzentrisch zu ihm angeordnetes Sekundärkupplungsrad 10 über eine Reibkupplung 11 an. Die Reibkupplung 11 kann eine Kupplungsfeder, ein Kupplungsfilz oder auch eine elektromechanische Kupplung sein.

Mit dem Sekundärkupplungsrad 10 ist ein Zwischenrad 17 in Eingriff, das um eine Achse 29a eines Schalthebels 29 drehbar ist. Der Schalthebel 29, der in einer Endstellung für Vorwärtsbetrieb (NOR) oder in einer Endstellung für Rückwärtsbetrieb (REV) stehen kann und in diesen Endlagen federbelastet festgelegt ist, steht in Fig. 1 im Uhrzeigersinn belastet in der NOR-Stellung. Das Zahnrad 17 kämmt mit einem Zahnrad 16, das bei der Darstellung nach Fig. 1 und 2 mit dem NOR-Wickelteller 12a in Eingriff ist.

Die Verzahnungskräfte wirken auf die einzelnen Zahnräder so, daß die Paarung NOR-Wickelteller 12a / Schwenkrad 16 einziehend und die Paarung Kupplungssekundärrad 10 / Zwischenrad 17 ausdrückend sind. Der Umschalthebel 29 ist in der NOR-Stellung nach Fig. 1 durch eine nicht dargestellte Schalthebelfeder 66 im Uhrzeigersinn belastet. Die Belastung ist dabei so groß, daß der Umschalthebel 29 entgegen den Verzahnungskräften nach rechts, also im Uhrzeigersinn, in Richtung auf den NOR-Wickelteller 12a gedrückt wird.

Zu dem Wickelgetriebe 09 gehört ein Kurzschlußdoppelzahnrad 57, dessen Welle 57c auf einem doppelarmigen, um eine Achse 58b schwenkbaren Kurzschlußradhebel 58 angeordnet ist. Wie ein Doppelpfeil 58d in Fig. 2 zeigt, kann das Kurzschlußrad 57 mit dem Primärkupplungsrad 9 und dem Sekundärkupplungsrad 10 derart in Eingriff oder außer Eingriff gebracht werden, daß beim Eingriff die Kupplung 11 kurzgeschlossen und außer Eingriff die Kupplung wirksam ist. Mit Hilfe dieses Kurzschlußrades 57 können die NOR- und REV-Wickelteller 12a, 12b zum Schnellspulen auf Schnellauf geschaltet werden. Um die höhere Schnellspulgeschwindigkeit zu erhalten, ist das Übersetzungsverhältnis so gewählt, daß die Zähnezahl des Primärkupplungszahnrades 9 größer ist als die Zähnezahl des Sekundärkupplungszahnrades 10 und daß die Zähnezahl des mit dem Zahnrad 9 kämmenden Kurzschlußrades 57a kleiner ist als die Zähnezahl des mit dem Sekundärkupplungsrad 10 kämmenden Kurzschlußrades 57b.

Weiterhin gehört zu dem Wickelgetriebe 09 ein Reverserad 15, das ständig mit dem Sekundärkupplungsrad 10 kämmt. Dieses Reverserad kann beim Reversebetrieb über das Zwischenrad 17 und das Schwenkrad 16 den REV-Wickelteller 12b antreiben.

Während an einem Arm des doppelarmigen Kurzschlußhebels 58 das Kurzschlußrad 57 angeordnet ist, trägt der andere Arm 58c des Kurzschlußhebels 58 einen Stellstift 58a, der in einer Leitkontur 39a des Kopfträgers 39 geführt ist. Diese Leitkontur besteht aus einer als Rundlaufführungsbahn ausgebildeten Leitkontur 39a mit einem in der Zeichnung nach links ausgebogenen, schräg ansteigenden linken Bahnteil 39aa und einem geradlinigen rechten Rücklaufbahnteil 39ar, die an den Enden miteinander verbunden sind. In der Leitkontur 39a kann der Stellstift 58a umlaufen. Fällt der Kopfträger 39 von der Spielstellung in die Auswerfstellung, dann durchläuft der Stellstift 58a den linken Bahnteil 39aa, wobei der Stellstift 58a nach links gezogen wird und das Kurzschlußrad 57 gegen das Primär- und Sekundärkupplungsrad 9 und 10 schwenkt. Bleibt der Kopfträger in dieser Stellung stehen, dann schließt das Kurzschlußrad 57 das Primär- und Sekundärkupplungsrad 9, 10 kurz. Da die Übersetzung vom Primärkupplungsrad 9 zum Sekundärkupplungsrad 10 über das Kurzschlußrad so gewählt ist, daß das Sekundärkupplungsrad 10 mit größerer Geschwindigkeit umlaufen kann, läßt sich über diese Getriebeanordnung ein Schnellauf der Wickelteller 12a, 12b erreichen. Dieser Schnellauf kann ein Schnellvorlauf (SVL) oder ein Schnellrücklauf (SRL) sein.

Der Schleppmechanismus 010 weist ein auf dem Chassis 1 gelagertes Schlepprad 42 auf, das mit einem Segmentrad 43 kämmt. Das Segmentrad 43 ist ein Doppelrad mit einem größeren Zahnkranz 43a, der eine Zahnlücke 43L aufweist. Dieser größere Zahnkranz 43a ist mit dem Primärkupplungsrad 9 in Eingriff bringbar. Ein zweiter kleinerer Zahnkranz 43b kann das Schlepprad 42 antreiben. Der kleinere Zahnkranz 43b trägt einen Halbzylinder 43c mit einer Richtfläche 43ba. An einer Kante 43k des Halbzylinders 43c liegt ein erster Arm 44a einer Schleppradfeder 44 so an, daß das Segmentrad 43 entgegen dem Uhrzeigersinn zum Drehen belastet ist.

### Kopfträger mit Schleppmechanismus in Eject-Stellung

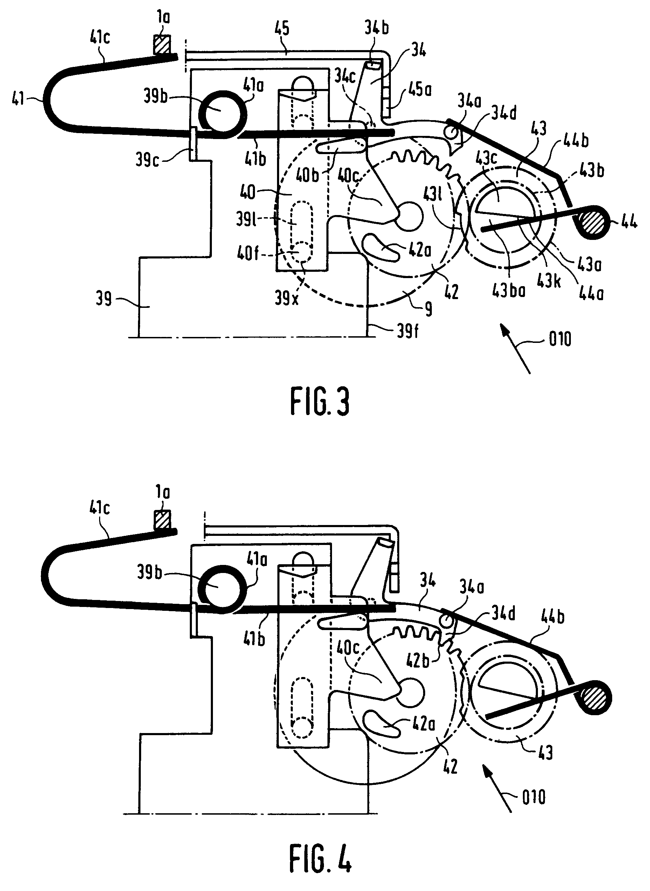

Fig. 3 zeigt den für die Kopfträgerbewegung wichtigen Teil des Kopfträgers 39, der mit einem Schleppschieber 40 versehen ist. Eine Kopfträgerfeder 41 belastet den Kopfträger in Spielstellung. Weiterhin ist eine Nachlaufsperre 34 vorgesehen. Die Ejectstange 45 wirkt auf noch zu beschreibende Weise mit dem Kopfträger zusammen.

Der Kopfträger 39 ist in der Darstellung nach Fig. 3 in die Eject-Stellung zurückgefahren; es handelt sich dabei um einen Zustand kurz vor dem Transportieren des Kopfträgers 39 in die Spielstellung. Die Ejectstange 45 ist ausgefahren, der Motor 23 läuft gerade an.

Der Schleppschieber 40 ist auf dem Kopfträger 39 in Kopfträger-Bewegungsrichtung verschiebbar gelagert; er greift dazu mit Bolzen 40f durch Längsschlitze 39L des Kopfträgers 39. Die vorgespannte Kopfträgerfeder 41 ist mit ihrem Windungsteil 41a an einem Federzapfen 39b des Kopfträgers 39 befestigt. Ein erster Arm 41b dieser Feder 41 liegt an einem Stift 40b des Schleppschiebers 40 an und drückt den Schieber 40 nach unten gegen einen nicht dargestellten Anschlag am Kopfträger 39. Ein zweiter Arm 41c der Feder 41 liegt zunächst an einem Federhaken 39c des Kopfträgers an. Somit stützt sich das vom ersten Arm 41b aufgebrachte Drehmoment in der Kopfträgerfeder 41 über den Federzapfen 39b am Kopfträger 39 selbst ab, und aus einer Bewegung des ersten Armes 41b (in der Zeichnung nach oben) resultiert eine Verschiebung des Kopfträgers 39 in die Spielstellung. Der Kopfträger 39 wird in Ausfahrrichtung (in der Zeichnung nach unten) über das freie Ende des zweiten Armes 41c belastet, welches sich am Chassis an dessen Lagerzapfen 1a abstützt. Die Kopfträgerfeder 41 stützt sich dabei mit ihrem zweiten Arm 41c so am Kopfträger 39 ab, daß eine Bewegung des ersten Armes 41b in Verschieberichtung des Kopfträgers 39 den Kopfträger verschiebt, da die resultierenden Drehmomente auf die Kopfträgerfeder 41 sich im Kopfträger 39 abstützen. Die Verlängerung des zweiten Armes 41c ist somit kräftemäßig vom ersten Arm 41b entkoppelt. Der zweite Arm 41c kann damit eine weitere federnde Funktion ausführen, z. B. das Rückführen des Kopfträgers 39 von der Eject-Stellung in die Spielstellung, die kraftmäßig auf einem anderen Niveau liegt. Der technische Vorteil besteht dabei in der Zusammenfassung der Federn für die Rückführung des Kopfträgers 39 in die Spielstellung und die Betätigung des Einziehmechanismus.

Fig. 3 zeigt den Schleppmechanismus 010 kurz vor dem Vorfahren des Kopfträgers 39 in die Spielstellung. Dieser Zustand ist dadurch gegeben, daß die Ejectstange 45 gerade ausgefahren ist. Bei diesem Ausfahren hat die Ejectstange 45 eine um eine chassisfeste Achse 34c drehbare Nachlaufsperre 34 entgegen dem Uhrzeigersinn gegen die Wirkung der Schleppradfeder 44 verschwenkt, indem sie einen Tastenbolzen 34b in ihrer Ausfahrrichtung nach links mitgenommen hat. Dabei hat sich eine Sperrnase 34d der Nachlaufsperre aus einer Zahnlücke 42b des Schlepprades 42 herausgehoben. Das Schlepprad ist damit zum Drehen freigegeben. Der drehende Antrieb erfolgt von der Feder 44 über den Arm 44a, welchen das Segmentrad 43 entgegen dem Uhrzeigersinn verdreht.

Fig. 4 zeigt den Zustand des Schleppmechanismus 010 vor dem Ausfahren der Ejectstange 45. Die Ejectstange ist zum Zwecke des Kassettenauswurfes nach rechts eingedrückt. Der Arm 44b der Schleppradfeder 44 drückt gegen den Stift 34a der Nachlaufsperre 34 und schwenkt diese im Uhrzeigersinn, so daß ihre Sperrnase 34d in die Zahnlücke 42d einfallen kann. Das Verschwenken der Nachlaufsperre 34 wurde möglich, da die Ejectstange 45 beim Einfahren keinen Druck mehr auf den Tastenbolzen 34b der Nachlaufsperre ausübt. Das Schlepprad 42 ist also gegen ein Drehen blockiert. Der Motor 23 steht zu diesem Zeitpunkt still bzw. läuft aus.

Durch die Blockade des Schlepprades 42 ist gewährleistet, daß unmittelbar nach dem Abfallen des Kopfträgers 39 kein erneuter Kopftransport stattfinden kann, wenn der Motor durch seinen Schwung trotz Abschaltung nachläuft. Erst wenn die Ejectstange beim Einschub einer Kassette oder zur Beendigung des Manual-Standby wieder ausfährt, kann das Schlepprad 42 drehen, weil dann die Nachlaufsperre 34 durch die Ejectstange 45 am Tastenbolzen 34b entgegen dem Uhrzeigersinn verdreht wird und die Sperrnase 34d somit aus der Zahnlücke 42b herausgezogen wird.

Fährt nun die Ejectstange 45 beim Einschieben einer Kassette aus und hebt sich, da nun die Nachlaufsperre entgegen dem Uhrzeigersinn verschwenkt, die Blockade des Schlepprades 42 auf, dann kann die Schleppradfeder 44 bei anlaufendem Motor 23 das Segmentrad 43 mittels ihres Armes 44a entgegen dem Uhrzeigersinn verdrehen. Damit kommt die Zahnung des Segmentrades 43 mit der Zahung des Primärkupplungsrades 9 in Eingriff. Das Primärkupplungsrad 9 dreht nun das Segmentrad 43 weiter und überträgt die Drehbewegung auf das Schlepprad 42. Der Bolzen 42a stößt gegen einen Arm 40c des Schleppschiebers 40 und schiebt den Schleppschieber 40 in Richtung auf die Spielstellung.

Durch die Kupplung zwischen Schleppschieber 40 und Kopfträgerfeder 41 über den Stift 40b des Schleppschiebers 40 wird der Kopfträger 39 bis zu nicht dargestellten Anschlägen im Chassis mitgenommen. Diese Anschläge geben dem Kopfträger 39 die Spielstellung vor. Im weiteren Verlauf der Drehung des Schlepprades 42 hebt dann der Schleppschieber 40 von seinem Anschlag 39x im Kopfträger 39 ab und verspannt den Kopfträger 39 über den Kopfträgerfederarm 41b gegen dessen Anschläge im Chassis.

### Kopfträger mit Schleppmechanismus in Spielstellung

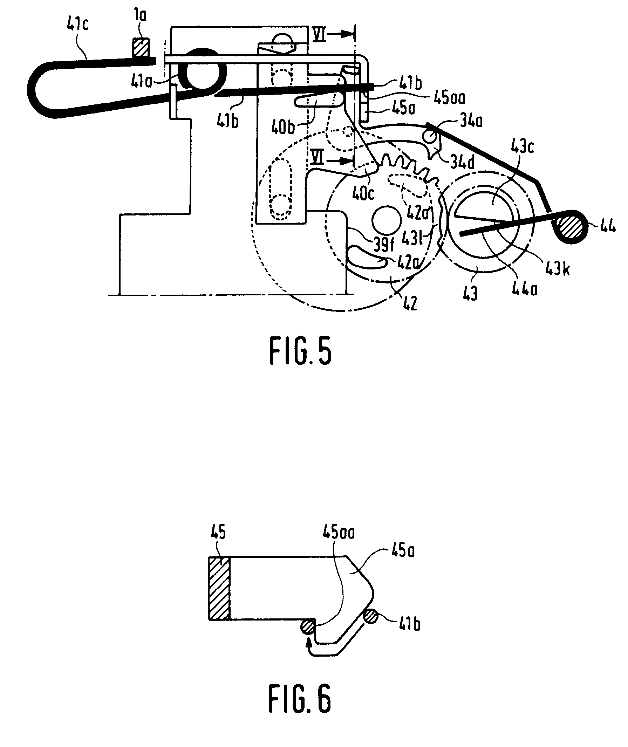

Fig. 5 zeigt den gegen die nicht dargestellten chassifesten Anschläge in Spielstellung vorgefahrenen Kopfträger 39. Der erste Arm 41b der Kopfträgerfeder 41 ist unter einem Rasthaken 45a der Ejectstange 45 und hinter dessen Rastnase 45aa gefallen (Fig. 6). Der Kopfträger 39 ist somit verriegelt.

Das Schlepprad 42 dreht weiter: Durch ein vorgesehenes Übersetzungsverhältnis zwischen der Segmentradverzahnung 43a und dem Schlepprad 42 von 1:2 hat sich das Segmentrad 43 zunächst um 360° gedreht, bis seine Zahnlücke 43L im Bereich des Kupplungsprimärrades 9 steht. Das Schlepprad 42 steht dann so, daß sein Bolzen 42a in der Position 42a' steht. In dieser Position drückt jedoch der erste Arm 44a der Schleppradfeder 44 genauso auf die Kante 43k des Halbzylinders 43c, wie in der Zeichnung dargestellt. Dies bedeutet, daß auf das Segmentrad 43 weiterhin ein Drehmoment entgegen dem Uhrzeigersinn wirkt, so daß das zahnlose Segment 43L übersprungen wird. Segmentrad 43 und Schlepprad 42 drehen somit weiter, bis der Bolzen 42a des Schlepprades 42 an dem Anschlag 39f des Kopfträgers 39 gestoppt wird. In dieser Position ist wiederum das Segmentrad 43 außer Eingriff mit dem Primärkupplungsrad 9 gebracht worden.

Wird zum Ausführen der Eject- oder der Manual-Standby-Funktion die Ejectstange 45 vom Benutzer eingeschoben (nach rechts), so bewegt sich der Rasthaken 45a mit nach rechts. Der erste Arm 41b der Kopfträgerfeder 41 wird nun freigegeben. Der Motor 34 hält an, und der Kopfträger 39 fällt von der Spielstellung ab in die Standby- bzw. Eject-Stellung. Der Anschlag 39f am Kopfträger gibt den Bolzen 42a des Schlepprades 42 frei. Dieses kann aber dennoch nicht über die Kraft der Schleppfeder 44 verdreht werden, da im Zuge der Einschubbewegung der Ejectstange 45 der Tastenbolzen 34b der Nachlaufsperre 34 ebenfalls nach rechts gefahren ist und dadurch die Nachlaufsperre 34 im Uhrzeigersinn, getrieben durch den Federarm 44b, verschwenkt. Die Sperrnase 34d der Nachlaufsperre ist in die Zahnlücke 42b eingefallen, so daß die Drehbewegung des Schlepprades 42 unterbunden ist.

## Patentansprüche

1. Magnetbandkassettengerät mit einem Laufwerk, einem zum Laufwerk gehörigen Wickelgetriebe (09) und einem Kopfträger (39), mit dem ein Tonkopf zwischen einer Spielstellung, in der der Tonkopf an ein in einer Magnetbandkassette geführtes Magnetband anlegbar ist, und einer Auswerf/Eject-Stellung verfahrbar ist, wobei der Kopfträger, der in Richtung auf die Auswerf/Eject-Stellung federbelastet ist, mittels eines Schleppmechanismus in Richtung auf die Spielstellung ziehbar ist und wobei ein Getrieberad des Schleppmechanismus (010) von einem Laufwerksantrieb in Umlauf versetzbar ist, dadurch gekennzeichnet, daß
- der Schleppmechanismus (010) ein vom Antriebsrad (9) des Wickelgetriebes (09) antreibbares Segmentzahnrad (43) mit einem zahnlosen Segment (43L) aufweist, wobei sich das Segment durch das Wirken von Arretierungen (34d und/oder 39f) in der Spiel- und Ejectstellung des Kopfträgers (39) vor dem Antriebsrad (9) befindet,
- das Segmentzahnrad (43) zusätzlich eine Vollzahnung (43b) aufweist, die mit einem Schlepprad (42) kämmt, das einen Bolzen (42a) aufweist, der auf den Kopfträger (39) derart einwirken kann, daß er diesen entweder in die Spielstellung drückt oder daß dieser das Drehen des Schlepprades in einer Stellung blockiert, in der das Segment (43L) vor dem Antriebsrad (9) steht und damit von diesem entkuppelt ist.

2. Magnetbandkassettengerät nach Anspruch 1, dadurch gekennzeichnet, daß eine Schleppradfeder (44) vorgesehen ist, die bestrebt ist, das Segmentrad (43) in den Zahneingriff mit dem Antriebsrad (9) des Wickelgetriebes (09) zu bringen, woran es nur durch die Arretierungen (34d und/oder 39f) gehindert ist.

3. Magnetbandkassettengerät nach einem der Ansprüche 1 oder 2, dadurch gekennzeichnet, daß eine Arretierung des Schlepprades (42) von einer Nachlaufsperre (34) gebildet ist, die bei aus der Wiedergabestellung vorgefahrener Ejectstange (45) mit einer Sperrnase (34d) in das Schlepprad drückt.

4. Magnetbandkassettengerät nach einem der Ansprüche 1 oder 2, dadurch gekennzeichnet, daß eine weitere Arretierung des Schlepprades (42) von einer Anschlagkante (39f) des Kopfträgers (39) bewirkt wird, gegen die bei in Spielstellung befindlichem Kopfträger (39) der Bolzen (42a) des Schlepprades (42) auflaufen kann.

5. Magnetbandkassettengerät nach Anspruch 4, dadurch gekennzeichnet, daß ein Schleppschieber (40) vorgesehen ist, der am Kopfträger (39) in dessen Verschieberichtung verschiebbar gelagert ist und über den der Kopfträger (39) mittels des Schlepprades (42) in die Spielstellung schiebbar ist.

6. Magnetbandkassettengerät nach einem der Ansprüche 1 bis 4, dadurch gekennzeichnet, daß der Kopfträger (39) mittels einer Kopfträgerfeder (41) in die Spielstellung gedrückt wird, die über den Schleppschieber (40) auf den Kopfträger (39) einwirkt.

7. Magnetbandkassettengerät nach einem der Ansprüche 1 bis 6, dadurch gekennzeichnet, daß die Kopfträgerfeder (41) als Schenkelfeder ausgebildet ist mit einem ersten Arm (41b), der den Kopfträger (39) in Richtung auf die Spielstellung belastet, und einem zweiten Arm (41c), der den Kopfträger (39) in Richtung auf die Eject-Stellung belastet.

8. Magnetbandkassettengerät nach Anspruch 7, dadurch gekennzeichnet, daß das freie Ende des ersten Armes (41b) der Kopfträgerfeder (41) an der ausgeschobenen Ejectstange (45) derart verrastbar ist, daß der erste Arm (41b) den Kopfträger (39) in der Spielstellung arretiert und daß die Arretierung aufhebbar ist durch das Einschieben der Ejectstange (45) zum Zwecke des Kassettenauswurfes.

9. Magnetbandkassettengerät nach Anspruch 7, dadurch gekennzeichnet, daß die Kopfträgerfeder (41) auf dem Kopfträger (39) mittels eines zwischen dem ersten Arm (41b) und dem zweiten Arm (41c) vorgesehenen Halterungsteils (41a) gelagert ist und daß ihr zweiter Arm (41c) sich ebenfalls am Kopfträger (39 an einer Stelle so abstützt, daß eine Bewegung des ersten Armes (41b) in Richtung auf die Spielstellung des Kopfträgers (39) den Kopfträger (39) verschiebt, da die resultierenden Drehmomente auf die Kopfträgerfeder (41) sich im Kopfträger (39) abstützen, und daß die Verlängerung des zweiten Armes (41c), die sich am Laufwerkschassis abstützt, kräftemäßig vom ersten Arm entkoppelt ist, wodurch der zweite Arm (41c) eine weitere federnde Funktion (z. B. Rückführung des Kopfträgers (39) von der Spielstellung in die Eject-Stellung, die kraftmäßig auf einem anderen Niveau liegt als die erste Funktion) ausführen kann.
